(19) Europäisches Patentamt
European Patent Office
Office européen des brevets

(11) Veröffentlichungsnummer: **0 014 678**
**B1**

(12) # EUROPÄISCHE PATENTSCHRIFT

(45) Veröffentlichungstag der Patentschrift: **25.05.83**

(51) Int. Cl.³: **C 09 B 19/02,** D 06 P 1/42, D 21 H 3/80

(21) Anmeldenummer: **80810025.9**

(22) Anmeldetag: **28.01.80**

(54) **Basische Dioxazinverbindungen, Verfahren zu deren Herstellung und deren Verwendung zum Färben und Bedrucken von Textilmaterial, Papier und Leder, und damit gefärbte und bedruckte Materialien.**

(30) Priorität: **02.02.79 CH 1042/79**

(43) Veröffentlichungstag der Anmeldung: **20.08.80 Patentblatt 80/17**

(45) Bekanntmachung des Hinweises auf die Patenterteilung: **25.05.83 Patentblatt 83/21**

(84) Benannte Vertragsstaaten: **CH DE FR GB IT**

(56) Entgegenhaltungen:
**CH-A-485 806**
**FR-A-1 117 562**
**FR-A-1 298 841**
**GB-A-850 159**
**GB-A-1 028 916**
**Handbuch »The Chemistry of Synthetic Dyes« Venkatoraman, Academic Pess Inc., New York, 1452, Bd I, S. 270**

(73) Patentinhaber: **CIBA-GEIGY AG, Patentabteilung Postfach, CH-4002 Basel (CH)**

(72) Erfinder: **Adam, Jean-Marie, Dr., 3, Rue de Montreux, F-68300 Saint-Louis (FR)**
Erfinder: **Galafassi, Pierre, Dr., 12, Rue des Sapins, F-68170 Rixheim (FR)**

**EP 0 014 678 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Basische Dioxazinverbindungen, Verfahren zu deren Herstellung und deren Verwendung zum Färben und Bedrucken von Textilmaterial, Papier und Leder und damit gefärbte und bedruckte Materialien

Die Erfindung betrifft neue basische Dioxazinverbindungen, Verfahren zu deren Herstellung und deren Verwendung als Farbstoffe zum Färben und Bedrucken von Textilmaterialien, Papier und Leder und damit gefärbte und bedruckte Materialien.

Die neuen basischen Dioxazinverbindungen entsprechen der Formel I

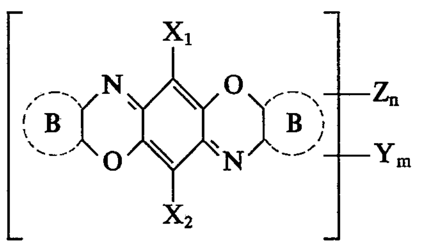

(I)

worin bedeutet: $X_1$ und $X_2$ unabhängig voneinander eine unverzweigte oder verzweigte Alkylgruppe mit 1 bis 4 Kohlenstoffatomen, eine gegebenenfalls substituierte Phenylgruppe, Halogen, Wasserstoff, Cyan eine gegebenenfalls im Phenylrest substituierte Phenylaminogruppe, die $CONH_2$-Gruppe, die CONH-phenyl-gruppe, welche im Phenylrest substituiert sein kann, oder eine COO-Alkyl($C_1-C_4$)-Gruppe;

Z entweder: eine basische Gruppe der Formel

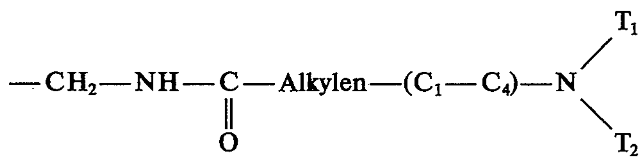

worin bedeuten: $T_1$ : H oder einen niedrigmolekularen, gegebenenfalls durch Hydroxyl substituierten Alkylrest, oder einen gegebenenfalls durch 1 bis 3 Methylreste substituierten Cyclohexylrest oder einen Phenylrest; und

$T_2$: einen niedrigmolekularen, gegebenenfalls durch Hydroxyl substituierten Alkylrest und wobei die Reste $R_1$ und $T_2$ zusammen mit dem an diese Reste gebundenen N-Atom einen Pyrrolidin-, Piperidin-, Morpholin- oder Piperazinring bilden können oder Z bedeutet eine quaternisierte Gruppe der Formel:

a) $-CH_2-NH-CO-\text{Alkylen}-(C_1-C_4)-K^{\oplus} A^{\ominus}$

worin bedeutet:

$K^{\oplus}$ den Rest 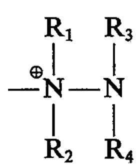 oder 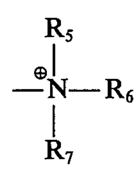

wobei $R_1$ und $R_2$ je eine Alkylgruppe ($C_1-C_4$) oder Cycloalkylgruppe oder unter Einschluß des Stickstoffatoms einen Heteroring bilden können;

$R_3$ und $R_4$ unabhängig voneinander je Wasserstoff, eine Alkylgruppe ($C_1-C_4$) oder eine Cycloalkylgruppe oder eine Acylgruppe;

$R_5$ eine gegebenenfalls durch OH oder $NH_2$ substituierte Alkylgruppe ($C_1-C_4$), eine Cycloalkylgruppe oder eine Arylgruppe;

$R_6$ und $R_7$ unabhängig voneinander eine Alkylgruppe ($C_1-C_4$), eine Cycloalkylgruppe, eine Alkoxygruppe ($C_1-C_4$) oder eine Arylgruppe; oder, daß unter Einschluß des Stickstoffatoms $R_1$ und $R_3$ und/oder $R_2$ und $R_4$ oder $R_5$ und $R_6$ oder $R_5$, $R_6$ und $R_7$ zusammen einen gegebenenfalls substituierten Pyridinring oder den Ring der Formel

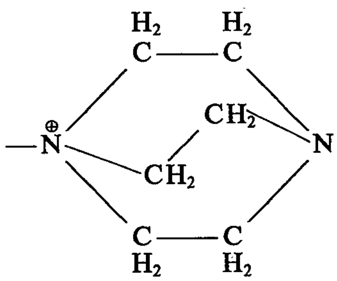

bilden, oder

b) 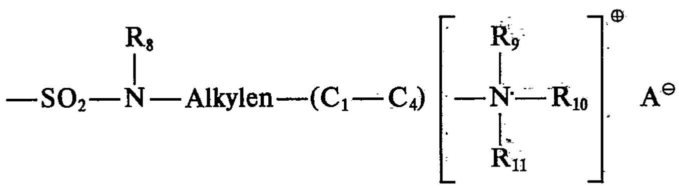

worin $R_8$ Wasserstoff oder eine Alkylgruppe $(C_1-C_4)$, $R_9$ und $R_{10}$ unabhängig voneinander eine Alkylgruppe $(C_1-C_4)$ oder eine Cycloalkylgruppe und $R_{11}$ eine Alkylgruppe $(C_1-C_4)$, eine Cycloalkylgruppe, eine Alkoxygruppe $(C_1-C_4)$, oder die $NH_2$-Gruppe bedeuten oder, daß 2 oder 3 Reste von $R_9$, $R_{10}$ und $R_{11}$ zusammen mit dem Stickstoffatom einen heterocyclischen Ring bilden können, oder

c) 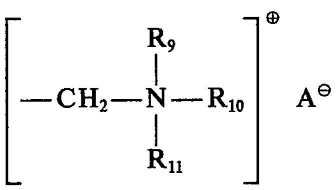

worin $R_9$, $R_{10}$ und $R_{11}$ die unter b) angegebene Bedeutung haben und wobei A in allen Fällen ein Anion darstellt; Y eine anionische Gruppe; B unabhängig voneinander ein ankondensiertes Ringsystem mit 2 bis 4 carbocyclischen und/oder heterocyclischen Ringen, welches außer den Substituenten Z und Y gegebenenfalls noch weiter substituiert sein kann; n die Zahlen von 1 bis 4 und m die Zahlen von 0 bis 2 mit der Bedingung, daß m nicht größer als n ist.

$X_1$ und $X_2$ in der Bedeutung einer unverzweigten oder verzweigten Alkylgruppe mit 1 bis 4 Kohlenstoffatomen stellen z. B. dar: die Methyl-, Äthyl-, n-Propyl-, iso-Propyl- und n-, sec- oder tert. Butylgruppe; in der Bedeutung einer gegebenenfalls substituierten Phenylgruppe bedeuten $X_1$ und $X_2$: unsubstituiertes Phenyl oder eine Phenylgruppe, welche z. B. substituiert ist durch: Alkylgruppen, verzweigt und unverzweigt mit 1 bis 4 Kohlenstoffatomen; Alkoxy mit 1 bis 4 Kohlenstoffatomen, wie Methoxy und Äthoxy oder Halogen, wie Fluor, Chlor oder Brom; $X_1$ und $X_2$ in der Bedeutung von Halogen stellt z. B. das Fluor-, Chlor- oder Bromatom dar; bedeutet $X_1$ und $X_2$ eine im Phenylrest von NH-phenyl oder CONH-phenyl substituierte Gruppe, so kommen als Substituenten in Frage: Alkylgruppen, verzweigt und unverzweigt mit 1 bis 4 Kohlenstoffatomen, Alkoxy mit 1 bis 4 Kohlenstoffatomen, wie Methoxy und Äthoxy oder Halogen, wie Fluor, Chlor oder Brom; bedeutet $X_1$ und $X_2$ eine COO-Alkyl-Gruppe so handelt es sich z. B. um die $COOH_3$, $COOC_2H_5$ und $COOC_3H_7$ (n- und -iso) Gruppe.

In bevorzugten Dioxazinverbindungen sind die Symbole $X_1$ und $X_2$ gleich und bedeuten insbesondere je Halogen, vor allem Chlor.

B in der Bedeutung eines ankondensierten Ringsystems mit 2 bis 4 carbocyclischen und/oder heterocyclischen Ringen stellt z. B. folgende Ringsysteme dar, wobei die Stelle X die Bindung zum Sauerstoff und die Stelle y die Bindung zum Stickstoff angibt.

Naphthalin: 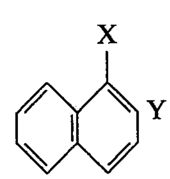

Fluoren: 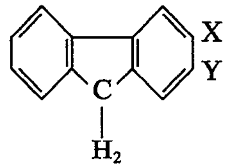

Diphenylenoxyd: 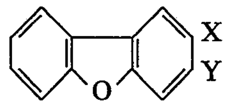

Diphenylensulfid: 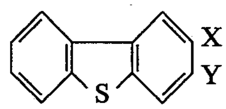

Diphenylendioxyd: 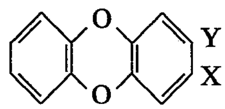

Phenanthren: 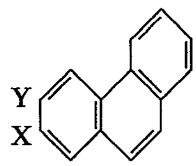

Anthracen: 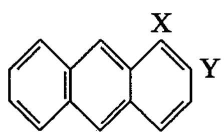

Fluorenon: 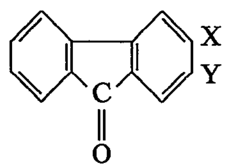

Xanthon: 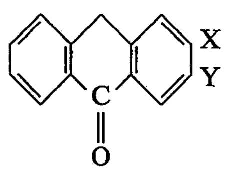

Thioxanthon: 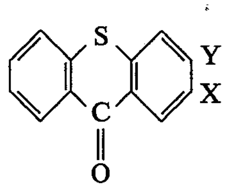

Pyren: 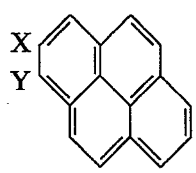

Chrysen: 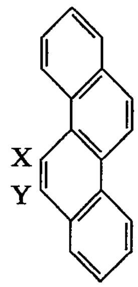 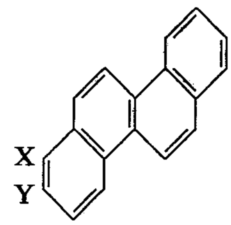

Carbazol: 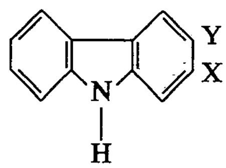

Anthrachinon: 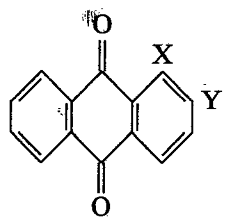

Alle diese Ringsysteme B können außer mit den Resten Z und Y noch weitersubstituiert sein, durch z. B.: Halogen, wie Fluor, Chlor oder Brom; unverzweigte oder verzweigte Alkylgruppen mit 1 bis 4 Kohlenstoffatomen wie die Methyl-, Äthyl-, n- und iso- Propyl- und n-, sec- oder tert. Butylgruppe; durch Alkoxygruppen mit 1 bis 4 Kohlenstoffatomen wie die Methoxy-, Äthoxy-, Propoxy- und Butoxygruppe, durch die $NO_2$, CN, SCN, OH und SH Gruppe und durch die am Stickstoffatom mono- oder disubstituierte $SO_2NO_2$-Gruppe und $NH_2$-Gruppe.

In bevorzugten Dioxazinverbindungen haben beide Symbole B die gleiche Bedeutung und stellen vor allem dar: ein ankondensiertes Carbazol-Ringsystem der Formel

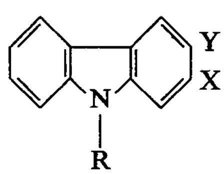

worin R Wasserstoff, eine unverzweigte oder verzweigte Alkylgruppe mit 1 bis 4 Kohlenstoffatomen oder eine Acylgruppe (z. B. CO-alkyl ($C_1-C_4$), CO-phenyl, $SO_2$-Alkyl ($C_1-C_4$) oder $SO_2$-phenyl) bedeutet, und insbesondere ein solches Carbazol-Ringsystem, worin R eine unverzweigte oder verzweigte Alkylgruppe mit 1 bis 4 Kohlenstoffatomen, vor allem die $C_2H_5$-Gruppe bedeutet.

Bedeutet Z eine basische Gruppe der Formel

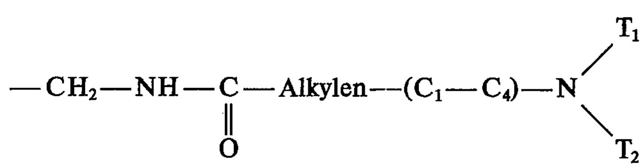

so sind als 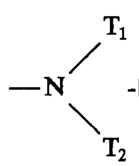 -Reste z. B. genannt:

$—N—(CH_3)_2$

$—N—(C_2H_5)_2$

$—NH—CH_3$

$—NH—C_3H_7$

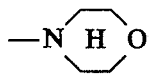

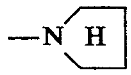

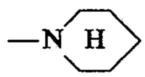

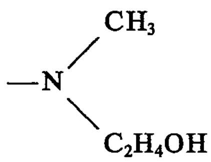

$—N—(C_2H_4OH)_2$

Als Anionen A kommen für den Fall, daß Z eine quaternisierte basische Gruppe darstellt sowohl anorganische wie organische Anionen in Frage; beispielsweise sind genannt:

Halogen, wie Chlorid-, Bromid- oder Jodid-, Sulfat-, Methylsulfat-, Aminosulfonat-, Perchlorat-, Carbonat-, Bicarbonat-, Phosphat-, Phosphormolybdat-, Phosphorwolframat-, Phosphorwolframmolybdat-, Benzolsulfonat-, Naphthalinsulfonat-, 4-Chlorbenzolsulfonat-, Oxalat-, Maleinat-, Acetat-, Propionat-, Lactat-, Succinat-, Chloracetat-, Tartrat-, Methansulfonat- oder Benzoationen, oder komplexe Anionen, wie das von Chlorzinkdoppelsalzen.

Bevorzugte Anionen sind das Chlorid-, Acetat-, Zinkchlorid- oder Methylsulfat-ion.

In bevorzugten Dioxazinverbindungen der Formel I bedeutet Z eine quaternisierte basische Gruppe oder einen, eine derartige Gruppe enthaltenden Rest, und n die Zahlen 1 bis 3.

Y in der Bedeutung einer anionischen Gruppe stellt z. B. die Phosphorsäuregruppe, die Carbonsäuregruppe oder die Sulfonsäuregruppe oder eine Salzform wie das Na-, K-, Li-, oder $NH_4$-Salz dieser freien Säuregruppe dar.

In bevorzugten Dioxazinverbindungen bedeutet m die Zahl 0, oder Y stellt die $SO_3H$-Gruppe bzw. eine Salzform davon dar.

Besonders interessante Dioxazinverbindungen entsprechen der Formel I, worin $X_1$ und $X_2$ je Chlor, B ein ankondensiertes Ringsystem der Formel

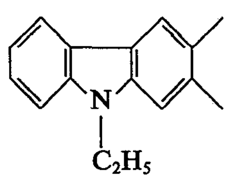

m die Zahl 0, n die Zahlen 1 bis 3 und Z eine quaternisierte basische Gruppe bedeuten.

Der Ausdruck »niedrigmolekular« bezieht sich auf Verbindungen die 1 bis 4 Kohlenstoffatome im Molekül enthalten.

Die Herstellung der gegebenenfalls quaternisierten, basischen Dioxazinverbindungen der Formel I erfolgt nach bekannter Art und Weise. Eine Möglichkeit besteht z. B. darin, daß man:

a) in eine Verbindung der Formel II

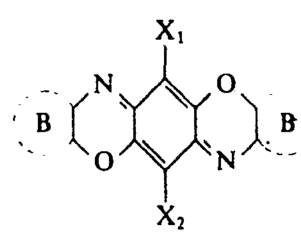

(II)

worin B gleich oder verschieden sein kann und $X_1$ und $X_2$ das unter Formel I angegebene bedeutet und welche Verbindung den Rest Y gegebenenfalls enthalten kann, eine gegebenenfalls quaternisierbare basische Gruppe Z oder einen, eine solche Gruppe Z enthaltenden Rest einführt, anschließend, sofern Y noch nicht vorhanden ist, gegebenenfalls eine wasserlöslichmachende

Gruppe Y einführt und die quaternisierbare basische Gruppe Z gegebenenfalls mit einem Quaternisierungsmittel quaternisiert; oder indem man

b) eine Verbindung der Formel III

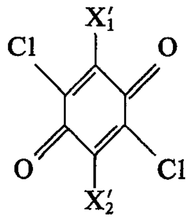

(III)

worin $X_1'$ und $X_2'$ dasselbe wie $X_1$ und $X_2$ jedoch kein CN bedeuten mit mindestens a Mol einer Verbindung $B-NH_2$, und b Mol einer Verbindung $B'-NH_2$, wobei die Summe von a und b Mol mindestens 2 Mol ist und wobei B und B′ gleich oder verschieden sein können, welche Verbindung B bzw. B′ eine gegebenenfalls quaternisierbare basische Gruppe Z oder eine bereits quaternisierte basische Gruppe Z enthält unter Ringschluß zu einer Dioxazinverbindung kondensiert, eine gegebenenfalls vorhandene quaternisierbare basische Gruppe Z mit einem Quaternisierungsmittel quaternisiert und gegebenenfalls die anionische Gruppe Y einführt.

Was die Verfahrensvariante a) betrifft so sind die Ausgangsverbindungen der Formel II mit und ohne einer anionischen Gruppe Y bekannt (z. B. US 2 016 504, 2 082 344 und 2 026 092) und können nach bekannter Art und Weise erhalten werden. Die Einführung einer quaternisierbaren basischen Gruppe Z oder die Einführung einer Gruppe Z, welche eine quaternisierbare Gruppe enthält erfolgt ebenfalls nach bekannter Art und Weise z. B. indem man die Verbindung der Formel II mit N-Methylolchloracetamid in konz. $H_2SO_4$ oder Phosphorsäure gegebenenfalls in Gegenwart von $P_2O_5$ bei 0° – 50°, vorzugsweise bei Raumtemperatur umsetzt und anschließend z. B. mit Pyridin aminiert oder indem man in die Verbindung der Formel II primär die $SO_2Cl$ Gruppe einführt nach üblicher Art und Weise (z. B. mit Chlorsulfonsäure bei 100 – 150° C), dann mit einem Diamin aminiert oder indem man in die Verbindung der Formel II die $-CH_2Cl$-Gruppe in Gegenwart von Dichlormethyläther/$H_2SO_4$ bei 50 – 60° oder in $H_2SO_4$/Chlorsulfonsäure und Paraformaldehyd bei 50 – 60° einführt und anschließend aminiert.

Die basische Gruppe Z ist befähigt, während des Färbeprozesses Protonen aufzunehmen um in eine kationische Gruppe umgewandelt zu werden.

Ist gewünscht, daß die quaternisierbare basische Gruppe Z in der Verbindung der Formel II in eine quaternisierte Verbindung übergeführt wird, so erfolgt die Quaternisierung ebenfalls nach bekannter Art und Weise z. B. in einem inerten Lösungsmittel wie Chlorbenzol, oder gegebenenfalls in wäßriger Suspension oder ohne Lösungsmittel in einem Überschuß des Quaternisierungsmittels bei einer Temperatur von ca. 20° bis 120° C, mit Quaternisierungsmitteln.

Geeignete Quaternisierungsmittel sind z. B. Alkylhalogenide, wie Methyl- oder Äthylchlorid, Methyl-, Äthyl oder Butylbromid oder Methyl- oder Äthyljodid, Alkylsulfate, wie Dimethyl-, Diäthyl- und Dibutylsulfat, Benzylchlorid, Chloressigsäureamid, Acrylsäureester, Epoxyde, wie Äthylenoxyd, Epichlorhydrin und Alkylester von aromatischen Sulfonsäuren, wie Methyl-p-toluolsulfonat, Methylbenzolsulfonat, sowie die Propyl- und Butylester von Benzolsulfonsäure.

Für den Fall, daß die Verbindungen der Formel II keine anionische Gruppe Y enthalten, so können diese Gruppen Y vorteilhaft vor der Quaternisierungsreaktion der quaternisierbaren Gruppe in eine quaternisierte Gruppe Z, eingeführt werden. Das geschieht z. B. durch Sulfierung mit Schwefelsäure oder für die Einführung einer Phosphorsäuregruppe nach der Arbeitsweise der US-PS 2 845 420.

Nach der eventuellen Quaternisierung und Einführung der wasserlöslichmachenden Gruppe Y werden die Dioxazinverbindungen der Formel I vom Reaktionsmedium getrennt und getrocknet.

Was die Verfahrensweise b) betrifft, so dient hier als Ausgangsmaterial die Verbindung der Formel III welche mit a- bzw. b-Mol $B-NH_2$, bzw. $B'-NH_2$ unter Ringschluß nach bekannter Art und Weise (K. Venkataraman, Vol. II (1952) S. 786 »The Chemistry of Synthetic Dyes« N. Y.) kondensiert wird. Ist gewünscht, daß die Endverbindungen der Formel I an der Stelle $X_1$ und $X_2$ eine CN-Gruppe tragen, so erfolgt die Herstellung derartiger Verbindungen derart, daß man eine Verbindung der Formel IIIa

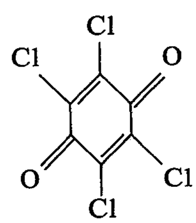

(IIIa)

mit a- bzw. b-Mol $B-NH_2$, bzw. $B'-NH_2$ unter Ringschluß wie weiter oben beschrieben kondensiert

und anschließend die beiden Cl-Atome an der Stelle von $X_1$ und $X_2$ gegen CN austauscht z. B. durch Umsatz mit Kupfercyanid.

Enthalten die Amine $B-NH_2$ bzw. $B'-NH_2$ eine quaternisierbare basische Gruppe Z so kann diese analog den vorstehenden Ausführungen in eine quaternisierte Verbindung übergeführt werden; gegebenenfalls wird anschließend noch eine anionische Gruppe Y wie weiter oben beschrieben, eingeführt.

Auf Grund dieser Verfahrensmaßnahmen ist es möglich Dioxazinverbindungen der Formel I herzustellen wo beide Symbole B gleich oder voneinander verschieden sind. Zudem können auch Mischungen hergestellt werden die enthalten: Dioxazinverbindungen der Formel I wo beide Symbole B gleich sind und Dioxazinverbindungen der Formel I wo die Symbole B verschieden sind.

Verwendung finden die neuen basischen gegebenenfalls quaternisierten Dioxazinverbindungen der Formel I, als Farbstoffe zum Färben und Bedrucken von Textilmaterialien, Papier und Leder, sowie zur Bereitung von Tinten.

Dienen diese Farbstoffe zum Färben und Bedrucken von Textilmaterialien so kommen als solche vor allem in Frage: natürliche und regenerierte Cellulosematerialien vor allem Baumwolle und Viskose wobei man brillante rote bis türkisfarbene und marineblaue Ausfärbungen erhält: dann Wolle und Seide und sauer modifizierte Polyamidmaterialien, sowie Polyacrylnitrilmaterialien, vor allem Naßkabel und basisch färbbares, modifiziertes Polyestermaterial. Die erfindungsgemäßen Dioxazinverbindungen der Formel I haben auf diesen Textilmaterialien vor allem auf Cellulosematerialien ein gutes Ziehvermögen, einen guten Ausziehgrad und die erhaltenen Färbungen weisen sehr gute Echtheiten, vor allem Naßechtheiten und Lichtechtheiten auf. Bei basischen Farbstoffen können die Naßechtheiten durch eine »Insolubilisierung« z. B. durch eine alkalische Nachbehandlung der Farbstoffmolekel auf der Faser, noch weiter verbessert werden. Darüber hinaus ist von Vorteil, daß die erfindungsgemäßen Dioxazinverbindungen der Formel I ohne Vorbehandlung der Cellulosematerialien und ohne Salzzugabe in die Färbeflotte auf diese Materialien aufziehen.

Eine weitere Verwendung der erfindungsgemäßen Dioxazinverbindungen der Formel I liegt in der Anwendung zum Färben von Papier aller Arten, aber vor allem von gebleichtem ungeleimtem und geleimtem Ligninfreiem Papier. Ganz besonders geeignet sind diese Verbindungen zum Färben von ungeleimtem Papier (Tissues) als Folge ihrer sehr hohen Standard-Affinität zu diesem Substrat.

Die erfindungsgemäßen Verbindungen ziehen sehr gut auf diese Substrate, wobei die Abwasser auch bei tiefen Nuancen bis über 1/1RT (= Richttyptiefe) farblos bleiben, was ein eminenter ökologischer Vorteil insbesondere im Hinblick auf die heutigen Abwasser-Gesetze ist. Der Ausziehgrad wird praktisch nicht von der Wasserhärte beeinflußt im Gegensatz zu den üblichen anionischen Direktfarbstoffen.

Die Färbungen sind naßecht, d. h. sie zeigen keine Neigung zum Ausbluten, wenn gefärbtes Papier in nassem Zustand mit feuchtem weißem Papier in Berührung gebracht wird. Diese Eigenschaft ist besonders für sogenannte »Tissues« erwünscht, bei denen vorhersehbar ist, daß das gefärbte Papier in nassem Zustand (z. B. getränkt mit Wasser, Alkohol, Tensid-Lösungen etc...) in Berührung mit anderen Flächen wie Textilien, Papier und dergleichen kommt, die gegen Verschmutzung geschützt werden müssen.

Die hohe Affinität für Papier und die große Ausziehgeschwindigkeit der erfindungsgemäßen Dioxazinfarbstoffe ist für das Kontinue-Färben von Papier von großem Vorteil und ermöglicht einen viel breiteren Einsatz dieses bekannten wirtschaftlichen Verfahrens das noch folgende Vorteile aufweist:

a) eine einfachere und schnellere Korrektur der Nuance und deshalb weniger Verlust an nicht Typ-konformem Papier (Ausschuß) im Vergleich zur Papiermassefärbung,
b) eine bessere Konstanz der Nuance, und
c) erübrigt sich eine gründliche Reinigung der Mischbutte nach jeder Partie, wobei gleichzeitig der Arbeitsprozeß verkürzt und das Verfahren optimiert wird.

Weiter dienen die Dioxazinverbindungen in der Anwendung zum Färben von Ledermaterialien nach den verschiedensten Applikationsverfahren, wie Sprühen, Bürsten und Tauchen.

Schlußendlich sind die neuen Dioxazinverbindungen der Formel I noch zum Färben von linearen synthetischen Superpolyamiden, wie Polyhexamethylenadipamid in der Masse geeignet. Das Anfärben der Polyamidschnitzel oder -chips erfolgt dabei vor allem aus einem wäßrigen Bad in Gegenwart von Netz- oder Dispergiermitteln und gegebenenfalls Salzen und anschließendem Schmelzen und Verformen.

Im Hinblick auf die reduzierbaren Eigenschaften der geschmolzenen Superpolyamidschmelzen und der hohen Schmelztemperatur (ca. 270 – 300° C) stellt die Verwendung dieser Farbstoffe der Formel I eine überraschende Bereicherung der Technik dar.

Bekannt sind aus der FR-A-1 298 841 kationische Farbstoffe, die zum Färben und Bedrucken von Polyacrylnitrilmaterialien verwendet werden, wobei der kationische Rest der Formel $-N \cdot X-OC-CH_2-CH \cdot R-N$(tert.) entspricht und nicht vergleichbar ist mit dem erfindungsgemäßen kationischen Rest. Die FR-A-1 117 562 beschreibt weiter neue basische Farbstoffe, wobei im

Beispiel 18 ein Dioxazinfarbstoff mit einer basischen Gruppe beschrieben wird, die außerhalb der erfindungsgemäßen basischen Gruppe liegt. Die CH-A-485 806 beschreibt schließlich ein Verfahren zur Herstellung von basischen Farbstoffen mit basischen und kationischen Gruppen, die ebenfalls außerhalb der erfindungsgemäßen basischen bzw. kationischen Gruppe liegen; dasselbe trifft für die GB-A-1 028 916 zu, die im Beispiel 25 einen kationischen Dioxazinfarbstoff beschreibt, und für die GB-A-850 159 die im Beispiel 9 einen Dioxazinfarbstoff mit einer basischen Sulfothiomorpholidgruppe beschreibt.

Gegenüber all diesen nächstbekannten Farbstoffen sind die erfindungsgemäßen Farbstoffe neu und zeichnen sich vor allem als gute Papierfarbstoffe mit sehr guten Echtheiten aus; dies ist überraschend und konnte dem aufgezeigten Stand der Technik nicht entnommen werden.

Die folgenden Beispiele veranschaulichen die Erfindung. Die Temperaturen sind in Grad Celsius angegeben, Teile (T) bedeuten Gewichtsteile und %-Angaben sind Gewichtsprozente.

Die Abkürzung RKN stellt eine Qualitätsbezeichnung dar und gibt den Reinheitsgrad der Cellulose an; die Abkürzung SR = Schopper-Riegler gibt den Mahlgrad an.

## Beispiel 1

Eine Mischung von 59 T der Verbindung der Formel:

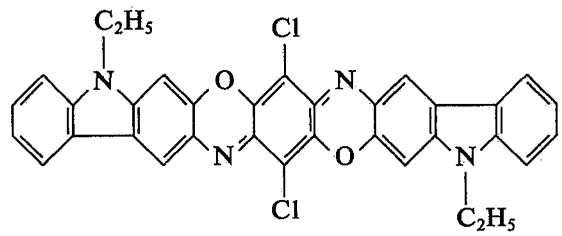

und 25 T N-Methylolchloracetamid werden bei 0–5° in 500 T 98%-Schwefelsäure gelöst. Das Gemisch wird dann während 15 Stunden bei Raumtemperatur gerührt. Man gießt diese Lösung auf Eis, wobei das Reaktionsprodukt ausfällt; anschließend wird abfiltriert und mit Wasser neutral gewaschen. Nach der Trocknung erhält man 77 T der Verbindung der Formel

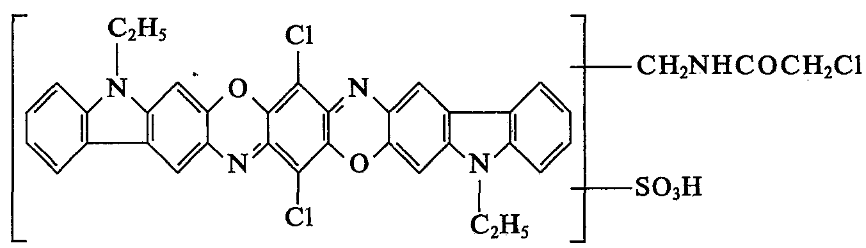

30 T der so erhaltenen Verbindung werden in 200 T Pyridin eingetragen und 1 Stunde auf 100° erwärmt. Die ausgefallene Verbindung der Formel

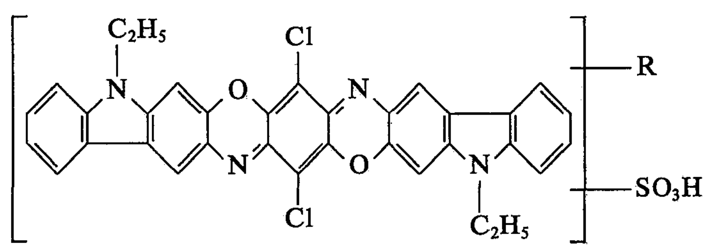

R = 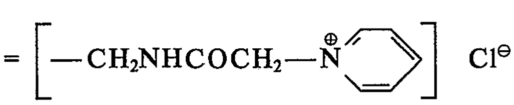

wird abgesaugt und getrocknet.

Ersetzt man im obigen Beispiel die 25 T N-Methylolchloracetamid durch 38 T N-Methylolchloracetamid und läßt 15 Stunden bei 0–5° reagieren, so erhält man nach der Quaternierung mit Pyridin eine Verbindung der Formel

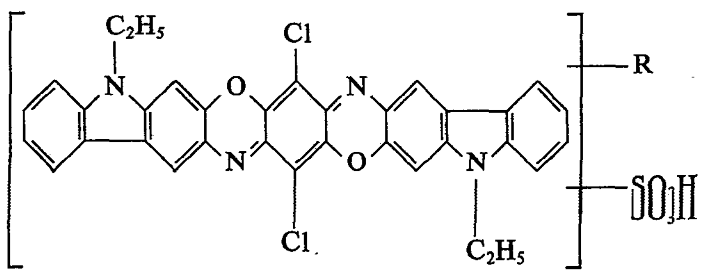

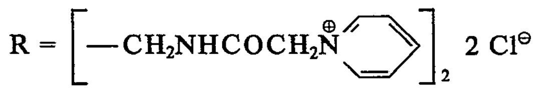

Beispiel 2

In 500 T 90%-Schwefelsäure wird ein Gemisch von 59 T der Verbindung der Formel:

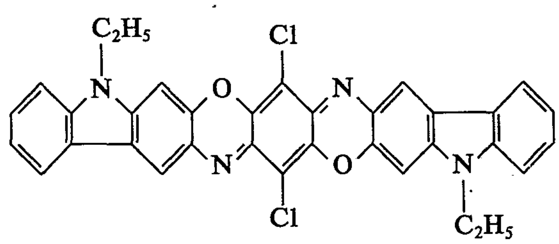

(Kondensationsprodukt aus Chloranil mit 3-Amino-N-Äthylcarbazol) und 38 T N-Methylolchloracetamid bei 0–5° eingetragen und während 15 Stunden bei 0–5° gerührt. Man fällt das Reaktionsprodukt auf Eis, saugt es nachher ab und wäscht es neutral mit Wasser. Nach der Trocknung erhält man 90 T der Verbindung der Formel

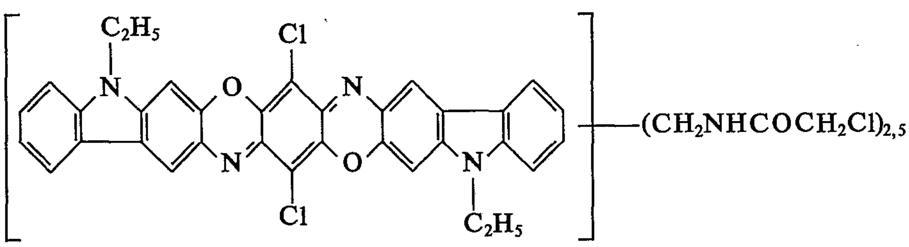

30 T dieser Verbindung werden gemäß Beispiel 1 mit Pyridin umgesetzt. Die isolierte kationische Verbindung der Formel:

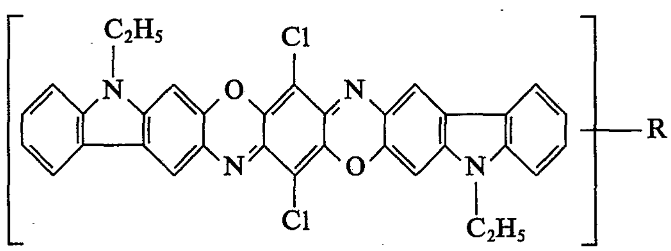

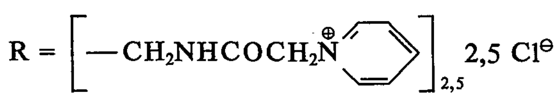

zeigt auf Papier und Baumwolle ein sehr gutes Ausziehvermögen, wobei die neutralen blauen Färbungen sehr hohe Naßechtheiten und eine sehr gute Lichtechtheit besitzen.

Ersetzt man im obigen Beispiel Pyridin durch α-Picolin, γ-Picolin oder durch ein Gemisch von α- und γ-Picolin oder durch 3-Hydroxypyridin, Triäthylendiamin oder Trimethylamin, so erhält man ähnliche Farbstoffe mit gleich guten Eigenschaften.

Verwendet man anstelle der 59 T des Kondensationsproduktes aus Chloranil mit 3-Amino-N-Äthylcarbazol äquivalente Teile der in folgender Tabelle 1 aufgeführten Kondensationsprodukte, setzt diese mit den angegebenen Teilen der N-Methylolverbindung um und aminiert mit Pyridin, so erhält man bei im übrigen gleicher Arbeitsweise kationische Dioxazinverbindungen gemäß der Kol. IV deren Farbnuance auf Baumwolle in Kolonne V der Tabelle angegeben ist.

Tabelle I

| I Bei-spiel | II Kondensationsprodukt | III N-Methylol-Verbindung | IV A = 2 $Cl^{\ominus}$ | V Nuancen auf Baumwolle |
| --- | --- | --- | --- | --- |
| | | N-Methylol-chlor-acetamid | | |
| 3 | 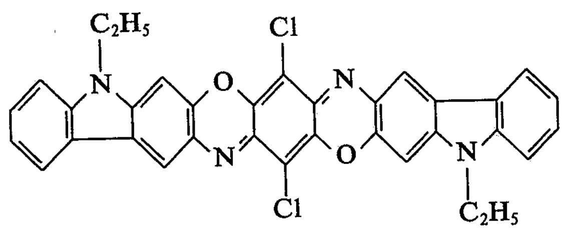 | 19 Teile | 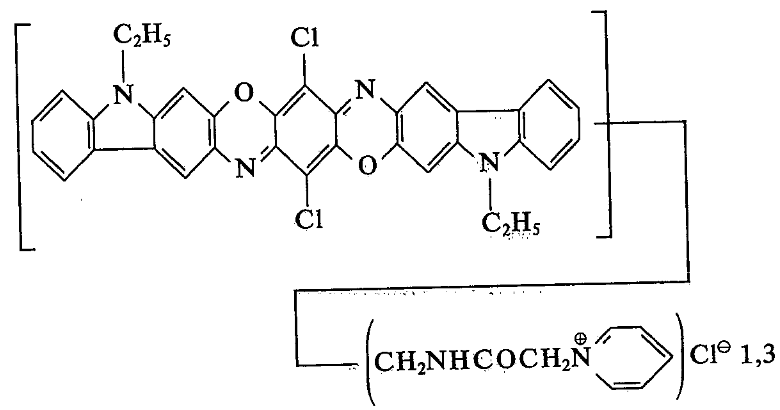 | blau |
| 4 | 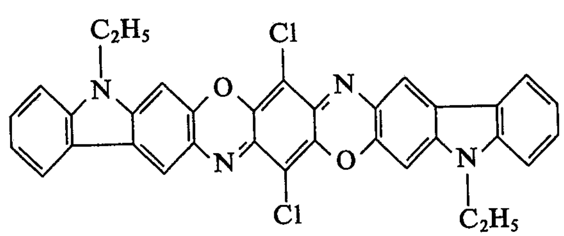 | 25 Teile | 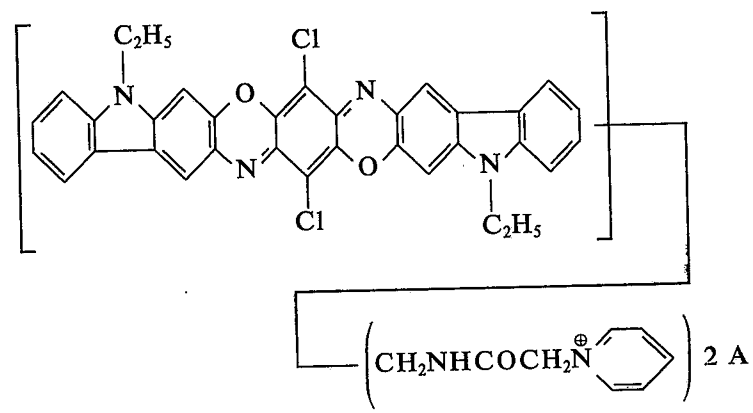 | blau |

Fortsetzung

| I Bei-spiel | II Kondensationsprodukt | III N-Methylol-Verbindung | IV A = 2 $Cl^{\ominus}$ | V Nuancen auf Baumwolle |
|---|---|---|---|---|
| | | N-Methylol-chlor-acetamid | | |
| 5 | 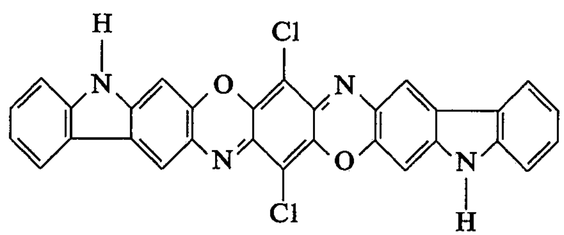 | 25 Teile | 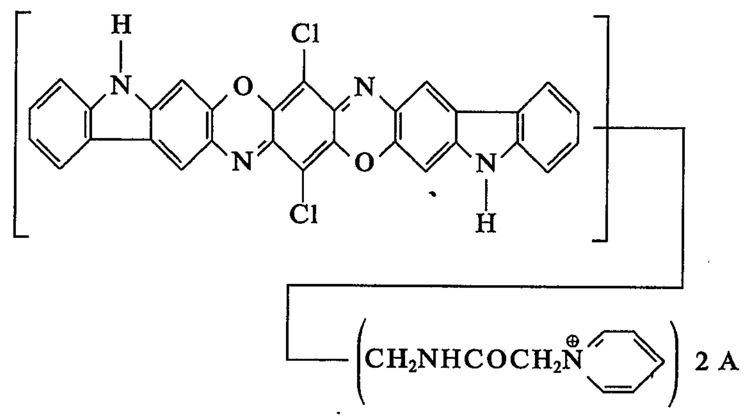 | rotblau |
| 6 | 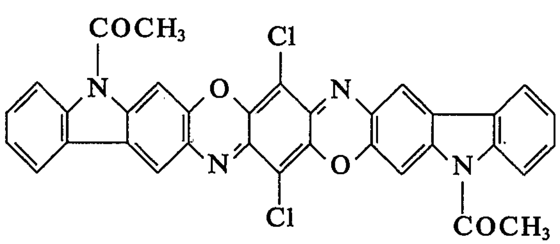 | 25 Teile | 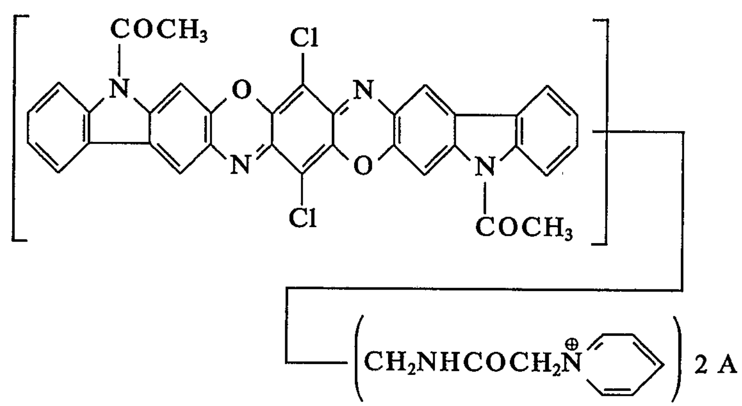 | blauviolett |

Fortsetzung

| I Bei-spiel | II Kondensationsprodukt | III N-Methylol-Verbindung | IV A = 2 $Cl^{\ominus}$ | V Nuancen auf Baumwolle |
|---|---|---|---|---|
| 7 | 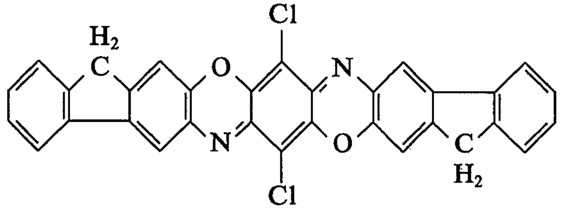 | N-Methylol-chlor-acetamid<br>25 Teile | 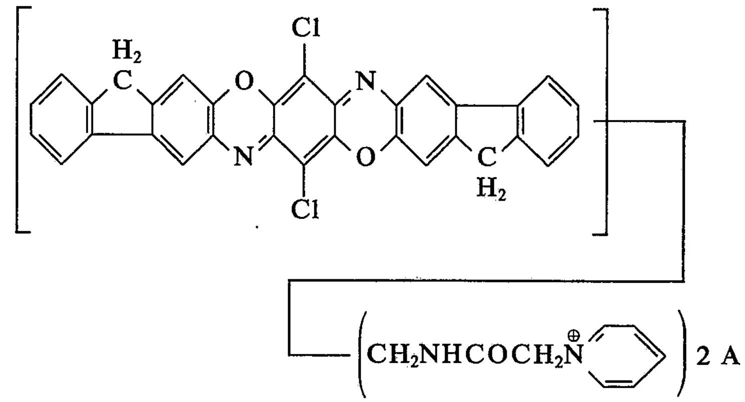 | violett |
| 8 | 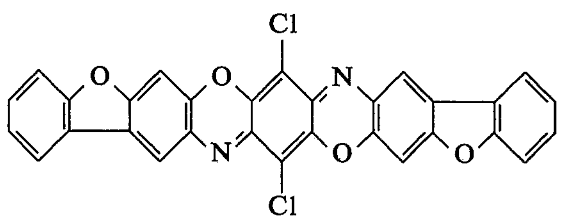 | 25 Teile | 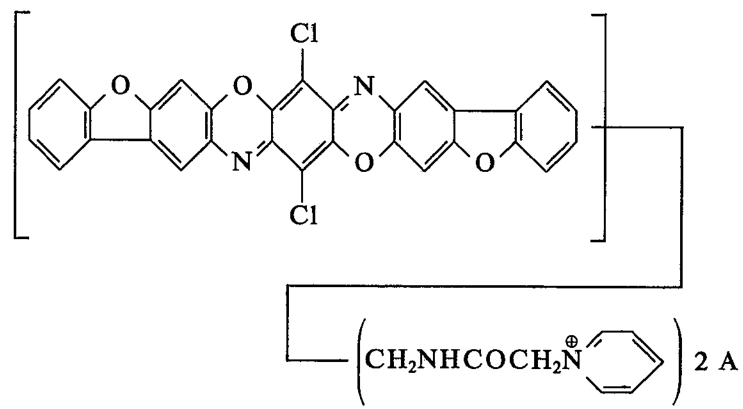 | rotviolett |

Fortsetzung

| I Bei-spiel | II Kondensationsprodukt | III N-Methylol-Verbindung | IV A = 2 $Cl^{\ominus}$ | V Nuancen auf Baumwolle |
|---|---|---|---|---|
| 9 | 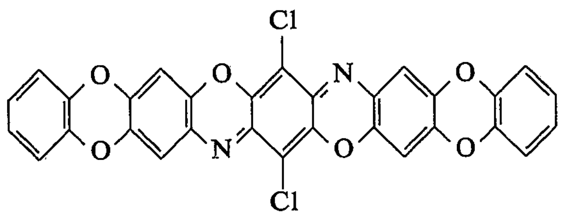 | N-Methylol-chlor-acetamid 25 Teile | 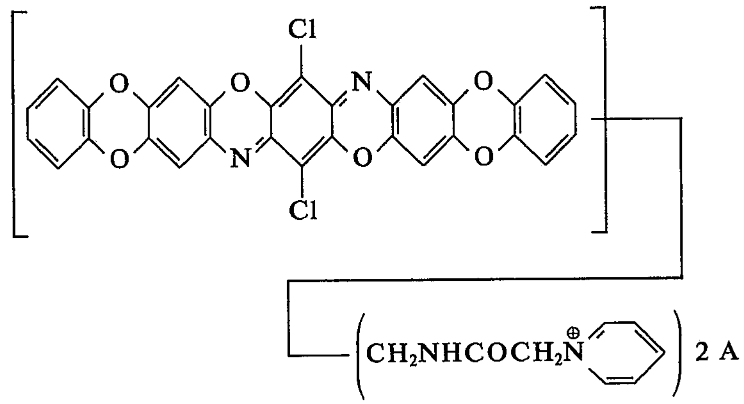 | blauviolett |
| 10 | 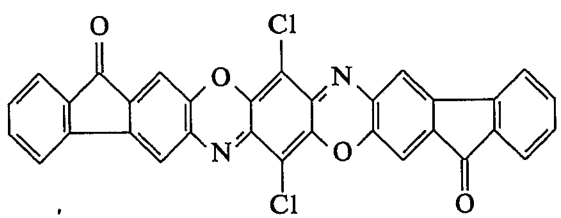 | 25 Teile | 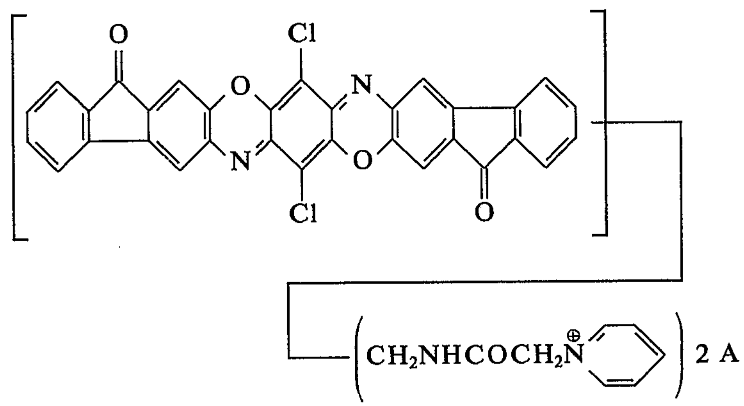 | blauviolett |

Beispiel 11

59 T des Kondensationsproduktes aus Chloranil mit 3-Amino-N-Äthylcarbazol werden in 350 T Chlorsulfonsäure mit 20 T Phosphorpentachlorid 4 Stunden lang auf 130° erhitzt. Dann wird das Reaktionsgemisch auf Eis gegossen, das ausgefallene Dioxazin-Sulfochlorid abgenutscht und mit Wasser neutral gewaschen.

Das isolierte trockene Sulfochlorid trägt man bei 25–30° in ein Gemisch von 150 T 3-Dimethylamino-1-propylamin und 150 T Pyridin ein. Die entstandene Verbindung der Formel:

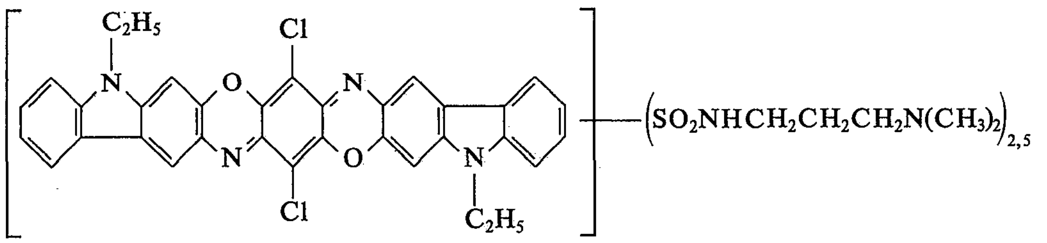

fällt aus und wird durch Filtration isoliert.

Die Quaternierung wird durch Erwärmen mit Dimethylsulfat in Dichlorbenzol bei 50–60° durchgeführt, wobei man eine Verbindung der Formel

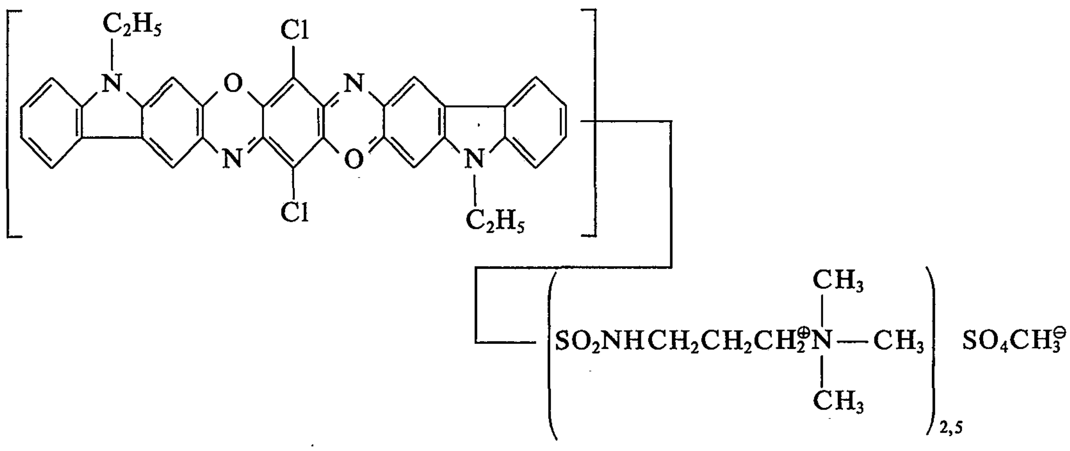

erhält, die auf Baumwolle gefärbt, eine neutrale blaue Nuance von guten Licht- und Naßechtheiten ergibt.

Quaternisiert man Äthylenchlorhydrin statt mit Dimethylsulfat, so erhält man einen ähnlichen Farbstoff mit gleich guten färberischen Eigenschaften.

Verwendet man anstelle des vorstehend genannten Kondensationsproduktes aus Chloranil mit 3-Amino-N-Äthylcarbazol eines der in folgender Tabelle II genannten Kondensationsproduktes, so erhält man bei im übrigen gleicher Arbeitsweise kationische Verbindungen gemäß der Kolonne III, deren Nuance auf Baumwolle in der IV. Kolonne der Tabelle angegeben ist.

Tabelle II

| I<br>Beispiel | II<br>Kondensationsprodukt | III<br>Kationische Verbindung<br>$B = 2-3\ SO_4CH_3^{\ominus}$ | IV<br>Nuancen auf Baumwolle |
|---|---|---|---|
| 12 | 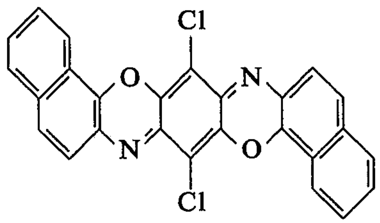 | 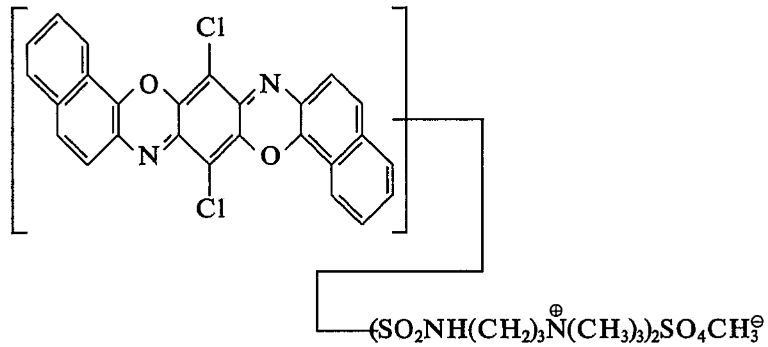 | violett |
| 13 | 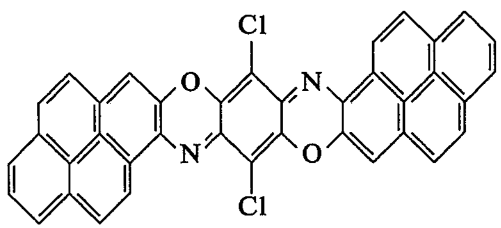 | 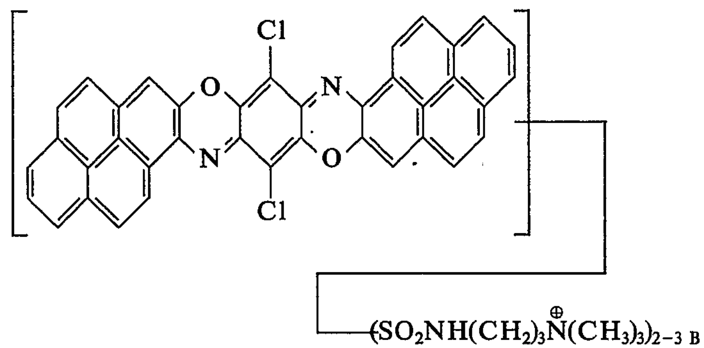 | blau |

Fortsetzung

| I Beispiel | II Kondensationsprodukt | III Kationische Verbindung $B = 2-3\ SO_4CH_3^{\ominus}$ | IV Nuancen auf Baumwolle |
|---|---|---|---|
| 14 | 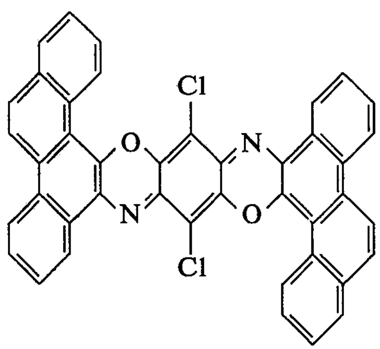 | 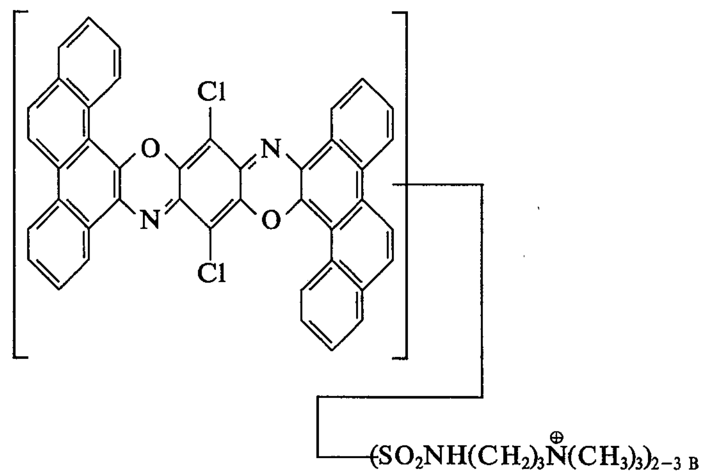 | grünblau |
| 15 | 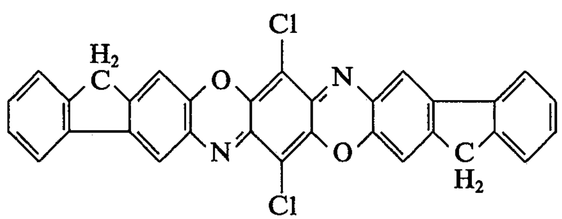 | 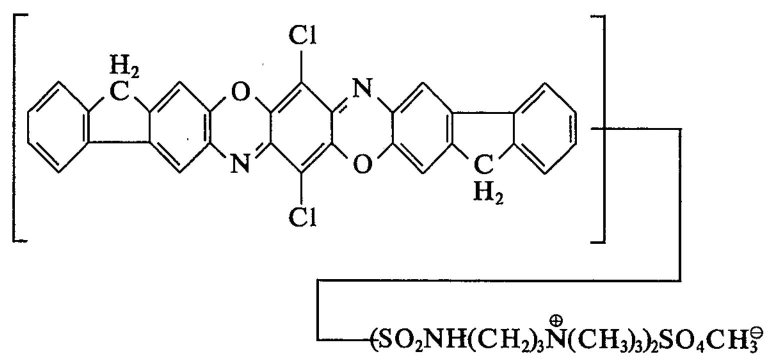 | violett |

Fortsetzung

| I Beispiel | II Kondensationsprodukt | III Kationische Verbindung $B = 2-3\ SO_4CH_3^{\ominus}$ | IV Nuancen auf Baumwolle |
|---|---|---|---|
| 16 | 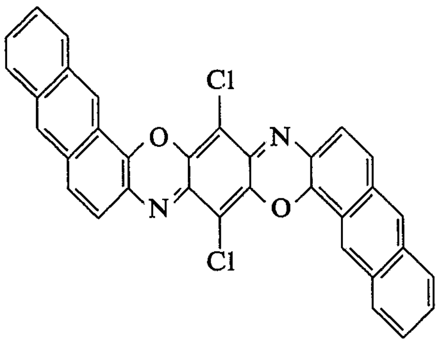 | 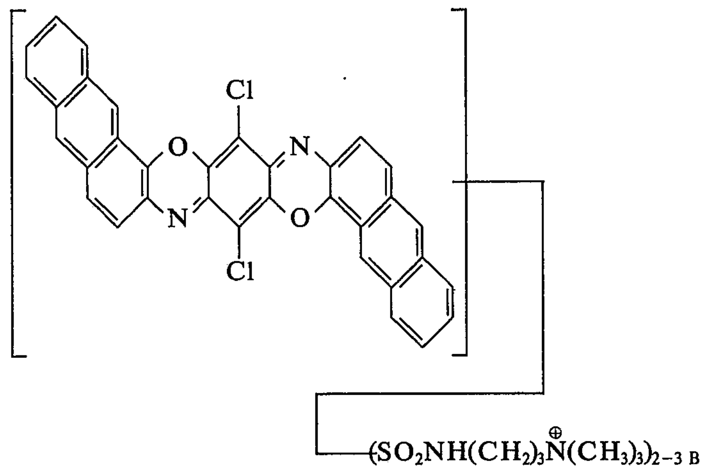 | grünblau |
| 17 | 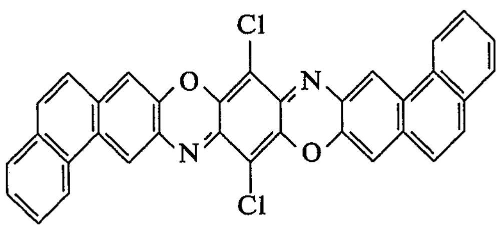 | 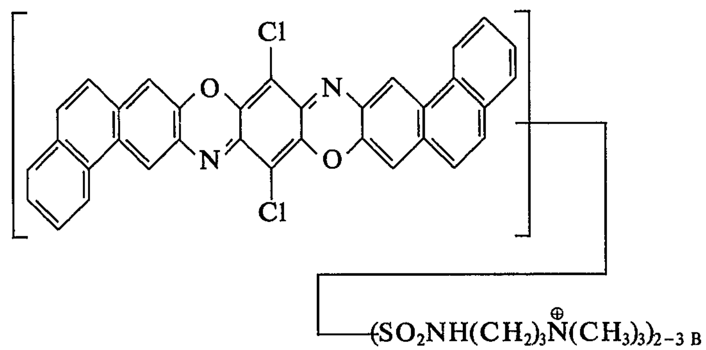 | blauviolett |

Beispiel 18

10 T gebleichtes mercerisiertes Baumwollgewebe werden in einer wäßrigen Flotte ohne Salzzugabe in einem Labor-Baumfärbeapparat (Flottenverhältnis 1 : 25 Wasserhärte 10 d° H, pH 6, Zirkulationsgeschwindigkeit der Färbeflotte 3 Umwalzungen/min.) enthaltend 0,08 T des Farbstoffes gemäß Beispiel 2 gefärbt.
Das Färbebad wird dabei in 60 Minuten linear von 40° auf 80° aufgeheizt, wobei das Baumwollgewebe in einem farbstarken, reinen brillanten Blauton gefärbt wird. Die Färbung weist eine sehr gute Lichtechtheit und eine völlig unerwartet hohe Naßechtheit auf, die üblicherweise nur mit Reaktiv- und Küpenfarbstoffen erhalten werden kann.

Beispiel 19

Verwendet man anstelle des Farbstoffes gemäß Beispiel 2 gleiche T des Farbstoffs gemäß Beispiel 1, so erhält man ein Baumwollgewebe das in einem farbstarken, reinen, brillanten rotstichigeren Blau gefärbt ist. Die Färbung weist gute Allgemeinechtheiten auf, die gleich gut sind wie diejenigen gemäß Beispiel 18.

Beispiel 20

Verwendet man zur Färbung von Baumwollgewebe anstelle des kationischen Farbstoffs gemäß Beispiel 2 eine gleiche molare Menge eines analogen bekannten (US-PS 2 026 092) anionischen Farbstoffs der Formel

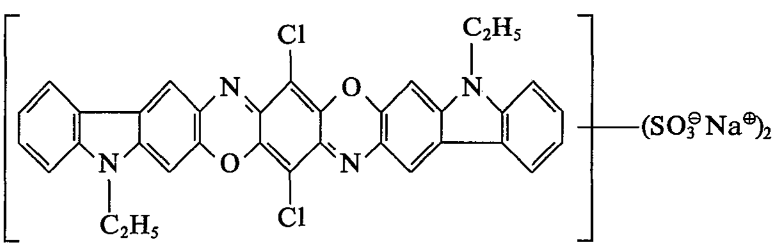

so wird das Baumwollgewebe in einem hellen Blau gefärbt wobei der Ausziehgrad kaum 5% beträgt. Die Naßechtheit der Färbung ist mit derjenigen eines herkömmlichen Direktfarbstoffs vergleichbar, d. h. wesentlich geringer als unter Verwendung des analogen erfindungsgemäßen kationischen Farbstoffs.

Beispiel 21

Verfährt man gemäß den Angaben des Beispiels 20, setzt jedoch dem Färbebad 30 g/l Kochsalz in 6 Portionen (Zeitabstand je 10 Minuten) zu, so erhält man ein Baumwollgewebe das in einem etwas farbschwächeren Blau als gemäß Beispiel 18 und 19 gefärbt wird, (Ausziehgrad ca. 75%), welches zudem eine wesentlich geringere Naßechtheit aufweist, wie sie für einen anionischen Direktfarbstoff üblich ist.

Beispiel 22

5 T Papier (ungeleimt, 50% Sulfit RKN 15 gebleicht und 50% Buche Sulfit gebleicht, Mahlgrad 21° SR) werden in einem Becher aus rostfreiem Stahl in 200 T Wasser (Wasserhärte 10 d°H, pH 6) angeschlämmt. Man setzt 0,1 T des kationischen Farbstoffs gemäß Beispiel 3 zu. Nach 20minütigem Rühren bei 22° setzt man weitere 1800 T Wasser zu. Anschließend wird ein Blatt Papier in einem »Frank« Blattbildner hergestellt, welches tiefblau gefärbt ist, und eine gute Lichtechtheit aufweist. Das gefärbte Blatt Papier ist auslaugebeständig gegen Wasser, Wasser/Alkohol 50 : 50, Milch und Tensid-Lösungen, wobei das Abwasser farblos ist. (Ausziehgrad über 99%).

Beispiel 23

Die Blattbildung verläuft wie im Beispiel 22, jedoch setzt man zur Färbung 0,1 T des bekannten anionischen Farbstoffs gemäß Beispiel 20 zu.
Im Vergleich zum Beispiel 22 wird das Papier in einem wesentlich helleren Blauton gefärbt, wobei das Abwasser tief-blau gefärbt ist. Der Ausziehgrad beträgt kaum 42%. Die Auslaugebeständigkeit gegen Wasser ist wesentlich geringer als im Falle des chromophorgleichen erfindungsgemäßen kationischen Farbstoffs gemäß Beispiel 3.

Beispiel 24

Färbung und Blattbildung verlaufen wie im Beispiel 22 mit dem Unterschied, daß man Weichwasser benützt (1° dH).

Es kann kein Unterschied in der erreichten Farbstärke, in den Echtheiten und in der Qualität des Abwassers festgestellt werden.

Beispiel 25

Die Färbung und die Blattbildung verlaufen gemäß Beispiel 22 mit dem Unterschied, daß 3%, bezogen auf die Papiermasse einer 10%igen wäßrigen Lösung eines handelsüblichen Naßfestmittels (Polyamidamin) dem Färbebad gleichzeitig mit dem Farbstoff zugegeben werden.

Es läßt sich kein Unterschied in den Echtheiten des gefärbten Papiers und in der Qualität des Abwassers feststellen.

Beispiel 26

Eine wäßrige Lösung des Farbstoffs gemäß Beispiel 2 wird mit Hilfe einer Dosierpumpe kontinuierlich einer fließenden, wäßrigen Suspension von Zellstoff in einer Kontinue-Laborpapiermaschine zudosiert. Die Maschine produziert 25 g/min. eines Papiers bestehend aus ungeleimtem Zellstoff (50% Sulfit RKN 15 gebleicht und 50% Buche Sulfit gebleicht).

Die Konzentration der Farbstofflösung beträgt 1 g/l und es werden 25 ml dieser Lösung pro min. zudosiert. An der Zugabestelle herrschen die folgenden Bedingungen: pH 6, Wasserhärte 10°dH, Temperatur 23°, Flottenverhältnis 1 : 400. Die Zeit zwischen Zugabe und Erreichen des Stoffauflaufes beträgt nur 4 Sekunden. Es entsteht ein egales, hellblau gefärbtes Papier, Das Lichtecht und gegen Wasser, Wasser/Alkohol, Milch und Tensid-Lösungen auslaugebeständig ist. Trotz der sehr kurzen Färbezeit ist das Abwasser farblos.

Beispiel 27

Färbung und Blattbildung verlaufen wie im Beispiel 22, jedoch wird statt Sulfit 5 T eines gebleichten Sulfat-Papiers (Stora 32 gebleicht, Mahlgrad 30° SR) eingesetzt. Das Papier wird tiefblau gefärbt, weist eine sehr gute Lichtechtheit auf und ist auslaugebeständig gegen Wasser/Alkohol 50 : 50, Milch und Tensid Lösungen. Das Abwasser ist farblos.

**Patentansprüche**

1. Dioxazinverbindungen der Formel I

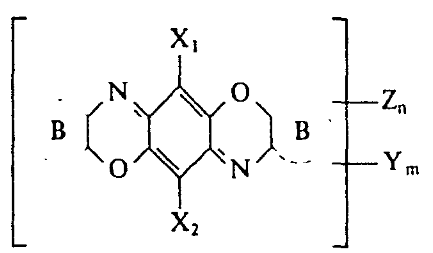

(I)

worin bedeutet: $X_1$ und $X_2$ unabhängig voneinander eine unverzweigte oder verzweigte Alkylgruppe mit 1 bis 4 Kohlenstoffatomen, eine gegebenenfalls substituierte Phenylgruppe, Halogen, Wasserstoff, Cyan eine gegebenenfalls im Phenylrest substituierte Phenylaminogruppe, die $CONH_2$-Gruppe, die CONH-phenyl-gruppe welche im Phenylrest substituiert sein kann oder eine $COO-Alkyl(C_1-C_4)$-Gruppe;

Z entweder: eine basische Gruppe der Formel

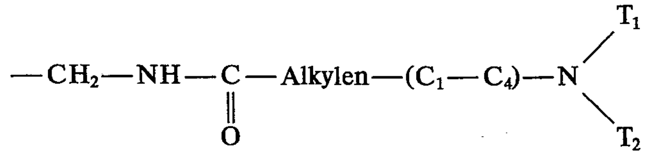

worin bedeuten: $T_1$: H oder einen niedrigmolekularen gegebenenfalls durch Hydroxyl substituierten Alkylrest oder einen gegebenenfalls durch 1 bis 3 Methylreste substituierten Cyclohexylrest oder einen Phenylrest; und

$T_2$: einen niedrigmolekularen, gegebenenfalls durch Hydroxyl substituierten Alkylrest und wobei die Reste $T_1$ und $T_2$ zusammen mit den an diese Reste gebundenen N-Atom einen Pyrrolidin-, Piperidin-, Morpholin- oder Piperazinring bilden können oder Z bedeutet eine quaternisierte Gruppe der Formel:

a) $-CH_2-NH-CO-\text{Alkylen}-(C_1-C_4)-K^{\oplus}A^{\ominus}$

worin bedeutet:

$K^{\oplus}$ den Rest 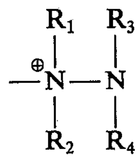 oder 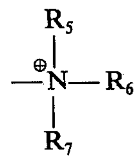

wobei $R_1$ und $R_2$ je eine Alkylgruppe ($C_1-C_4$) oder Cycloalkylgruppe oder unter Einschluß des Stickstoffatoms einen Heteroring bilden können;
$R_3$ und $R_4$ unabhängig voneinander je Wasserstoff, eine Alkylgruppe ($C_1-C_4$) oder eine Cycloalkylgruppe oder eine Acylgruppe;
$R_5$ eine gegebenenfalls durch OH oder $NH_2$ substituierte Alkylgruppe ($C_1-C_4$), eine Cycloalkylgruppe oder eine Arylgruppe;
$R_6$ und $R_7$ unabhängig voneinander eine Alkylgruppe ($C_1-C_4$), eine Cycloalkylgruppe, eine Alkoxygruppe ($C_1-C_4$) oder eine Arylgruppe; oder, daß unter Einschluß des Stickstoffatoms $R_1$ und $R_3$ und/oder $R_2$ und $R_4$ oder $R_5$ und $R_6$ oder $R_5$, $R_6$ und $R_7$ zusammen einen gegebenenfalls substituierten Pyridinring oder den Ring der Formel

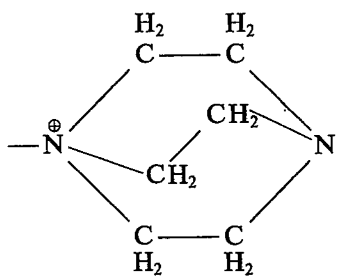

bilden, oder

b) 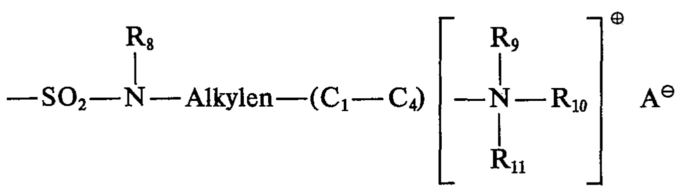

worin $R_8$ Wasserstoff oder eine Alkylgruppe ($C_1-C_4$), $R_9$ und $R_{10}$ unabhängig voneinander eine Alkylgruppe ($C_1-C_4$) oder eine Cycloalkylgruppe und $R_{11}$ eine Alkylgruppe ($C_1-C_4$), eine Cycloalkylgruppe, eine Alkoxygruppe ($C_1-C_4$), oder die $NH_2$-Gruppe bedeuten oder, daß 2 oder 3 Reste von $R_9$, $R_{10}$ und $R_{11}$ zusammen mit dem Stickstoffatom einen heterocyclischen Ring bilden können, oder

c) 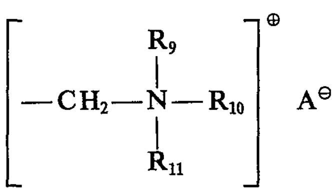

worin $R_9$, $R_{10}$ und $R_{11}$ die unter b) angegebene Bedeutung haben und wobei A in allen Fällen ein Anion darstellt; Y eine anionische Gruppe; B unabhängig voneinander ein ankondensiertes Ringsystem mit 2 bis 4 carbocyclischen und/oder heterocyclischen Ringen welches außer den Substituenten Z und Y gegebenenfalls noch weiter substituiert sein kann; n die Zahlen von 1 bis 4 und m die Zahlen von 0 bis 2 mit der Bedingung, daß m nicht größer als n ist.

2. Dioxazinverbindungen gemäß Anspruch 1, dadurch gekennzeichnet, daß die Symbole $X_1$ und $X_2$ gleich sind.

3. Dioxazinverbindungen gemäß Anspruch 2, dadurch gekennzeichnet, daß die Symbole $X_1$ und $X_2$ je Halogen, vor allem Chlor bedeuten.

4. Dioxazinverbindungen gemäß Anspruch 1, dadurch gekennzeichnet, daß beide B gleich sind und eines der folgenden ankondensierten Ringsysteme bedeutet: Naphthalin, Fluoren, Diphenylenoxyd, Diphenylensulfid, Diphenylendioxyd, Phenanthren, Anthracen, Fluorenon, Xanthon, Thioxanthon, Pyren, Chrysen, Carbazol oder Anthrachinon.

5. Dioxazinverbindungen gemäß Anspruch 4, dadurch gekennzeichnet, daß beide B ein ankondensiertes Carbazol-Ringsystem der Formel

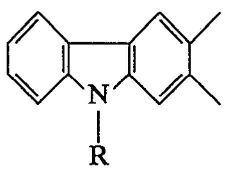

bedeuten, worin R Wasserstoff, eine unverzweigte oder verzweigte Alkylgruppe mit 1 bis 4 Kohlenstoffatomen oder eine Acylgruppe darstellt.

6. Dioxazinverbindungen gemäß Anspruch 5, dadurch gekennzeichnet, daß beide B ein ankondensiertes Ringsystem der Formel

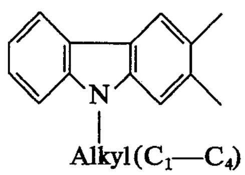

insbesondere $C_2H_5$ bedeuten.

7. Dioxazinverbindungen gemäß Anspruch 1, dadurch gekennzeichnet, daß Z eine quaternisierte basische Gruppe darstellt, oder eine derartige Gruppe enthält.

8. Dioxazinverbindungen gemäß Anspruch 1, dadurch gekennzeichnet, daß n die Zahlen 1 bis 3 bedeutet.

9. Basische Dioxazinverbindungen gemäß Anspruch 1, dadurch gekennzeichnet, daß m die Zahl 0 bedeutet.

10. Dioxazinverbindungen gemäß Anspruch 1, worin Z eine quaternisierte Gruppe oder einen, eine solche Gruppe enthaltenden Rest darstellt, worin das Anion A bedeutet: Cl, $CH_3COO$, $ZnCl_3$ oder $CH_3SO_4$.

11. Dioxazinverbindungen gemäß Anspruch 1, dadurch gekennzeichnet, daß $X_1$ und $X_2$ je Chlor, B ein ankondensiertes Ringsystem der Formel

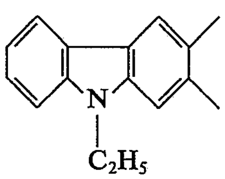

m die Zahl 0, n die Zahlen 1 bis 3 und Z eine quaternisierte Gruppe bedeuten.

12. Verfahren zur Herstellung von Dioxazinverbindungen der Formel I gemäß Anspruch 1, dadurch gekennzeichnet, daß man

a) in eine Verbindung der Formel II

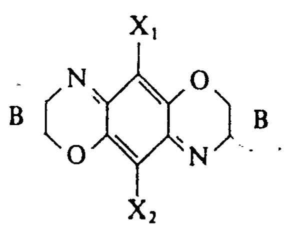

(II)

worin B gleich oder verschieden sein kann und $X_1$ und $X_2$ das unter Formel I angegebene bedeutet und welche den Rest Y gegebenenfalls enthalten kann, eine gegebenenfalls quaternisierbare basische Gruppe Z oder einen, eine solche Gruppe Z enthaltenden Rest einführt, anschließend,

sofern Y noch nicht vorhanden ist, gegebenenfalls eine wasserlöslichmachende Gruppe Y einführt und die quaternisierbare basische Gruppe Z gegebenenfalls mit einem Quaternisierungsmittel quaternisiert; oder

b) eine Verbindung der Formel III

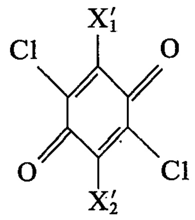

(III)

worin $X_1'$ und $X_2'$ dasselbe wie $X_1$ und $X_2$ jedoch kein CN bedeuten mit mindestens a-Mol einer Verbindung $B-NH_2$, und b-Mol einer Verbindung $B'-NH_2$ wobei die Summe a und b mindestens 2 ist und wobei B und B' gleich oder verschieden sind, welche Verbindung eine gegebenenfalls quaternisierbare basische oder eine bereits quaternisierte basische Gruppe Z enthält unter Ringschluß zu einer Dioxazinverbindung kondensiert, eine gegebenenfalls vorhandene quaternisierbare basische Gruppe Z mit einem Quaternisierungsmittel quaternisiert und gegebenenfalls die wasserlöslichmachende Gruppe Y einführt oder, sofern $X_1$ und $X_2$ im Endprodukt der Formel I CN bedeuten, daß man eine Verbindung der Formel IIIa

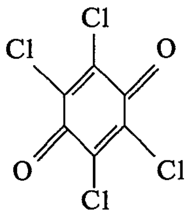

(IIIa)

mit a- bzw. b-Mol $B-NH_2$, bzw. $B'-NH_2$ unter Ringschluß kondensiert und anschließend die beiden Cl-Atome an der Stelle von $X_1$ und $X_2$ gegen CN austauscht.

13. Verwendung der gegebenenfalls quaternisierten basischen Dioxazinverbindungen gemäß Anspruch 1 als Farbstoffe zum Färben und Bedrucken von Textilmaterialien, Papier, Leder sowie zum Färben von linearen synthetischen Superpolyamiden in der Masse.

14. Verwendung der gegebenenfalls quaternisierten basischen Dioxazinverbindungen gemäß Anspruch 1 als Farbstoffe zum Färben und Bedrucken von natürlichen und regenerierten Cellulosematerialien, vor allem Baumwolle, und Viskose, ohne Salzzugabe.

15. Verwendung der gegebenenfalls quaternisierten basischen Dioxazinverbindungen gemäß Anspruch 1 als Farbstoffe zum Färben und Bedrucken von Papier aller Arten.

16. Verwendung der gegebenenfalls quaternisierten basischen Dioxazinverbindungen gemäß Anspruch 1 zum Färben und Bedrucken von gebleichtem, ungeleimtem ligninfreiem Papier (Tissue).

17. Verwendung der gegebenenfalls quaternisierten basischen Dioxazinverbindungen gemäß Anspruch 1 zum Färben und Bedrucken von natürlichen Polyamidmaterialien wie Wolle und Seide oder von basisch färbbaren, modifizierten Polyamid.

18. Verwendung der gegebenenfalls quaternisierten basischen Dioxazinverbindungen gemäß Anspruch 1 zum Färben und Bedrucken von basisch färbbaren, modifizierten Polyestermaterialien.

19. Verwendung der gegebenenfalls quaternisierten basischen Dioxazinverbindungen gemäß Anspruch 1 zum Färben und Bedrucken von Polyacrylnitrilmaterialien.

20. Die mit den gegebenenfalls quaternisierten basischen Dioxazinverbindungen gemäß Anspruch 1 behandelten, bzw. gefärbten und bedruckten Materialien.

## Claims

1. A dioxazine compound of the formula I

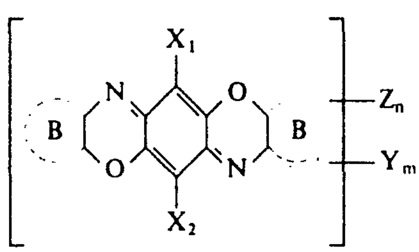

(I)

wherein each of $X_1$ and $X_2$ independently of the other is an unbranched or branched alkyl group of 1 to 4 carbon atoms, an unsubstituted or substituted phenyl group, halogen, hydrogen, cyano, a phenylamino group which is unsubstituted or substituted in the phenyl nucleus, the $CONH_2$ group, the CONH-phenyl group which can be substituted in the phenyl moiety, or a $COO-C_1-C_4$ alkyl group; Z is a basic group of the formula

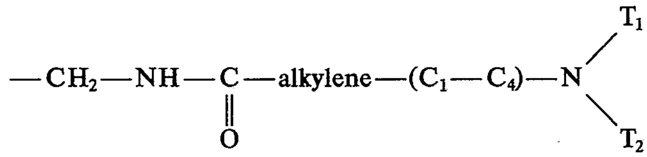

wherein $T_1$ is hydrogen or a low molecular alkyl group which may be substituted by hydroxyl or a cyclohexyl radical which may be substituted by 1 to 3 methyl radicals, or is a phenyl radical, and $T_2$ is a low molecular alkyl radical which may be substituted by hydroxyl, while $T_1$ and $T_2$ together with the nitrogen atom to which they are attached can form a pyrrolidine, piperidine, morpholine or piperazine ring; or Z is a quaternised group of the formula

a) $-CH_2-NH-CO-\text{alkylene}-(C_1-C_4)-K^{\oplus}\,A^{\ominus}$

wherein $K^{\oplus}$ is the radical

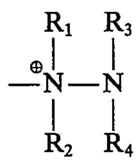 or 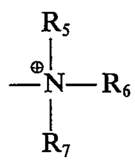

wherein each of $R_1$ and $R_2$ is a $C_1-C_4$ alkyl group or a cycloalkyl group or together with the nitrogen atom to which they are attached can form a heterocyclic ring; each of $R_3$ and $R_4$ independently of the other is hydrogen, a $C_1-C_4$ alkyl group, a cycloalkyl group or an acyl group; $R_5$ is a $C_1-C_4$ alkyl group which is unsubstituted or substituted by OH or $NH_2$, a cycloalkyl group or an aryl group; each of $R_6$ and $R_7$ independently of the other is a $C_1-C_4$ alkyl group, a cycloalkyl group, a $C_1-C_4$ alkoxy group or an aryl group; or $R_1$ and $R_3$ and/or $R_2$ and $R_4$ or $R_5$ and $R_6$ or $R_5$, $R_6$ and $R_7$, together with the nitrogen atom to which they are attached, form an unsubstituted or substituted pyridine ring or the ring of the formula

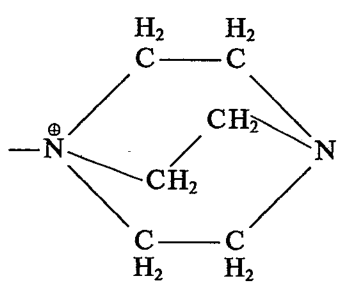

or Z is a radical of the formula

b) 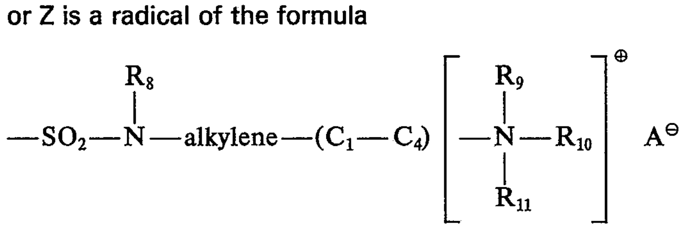

wherein $R_8$ is hydrogen or an alkyl group of 1 to 4 carbon atoms, each of $R_9$ and $R_{10}$ independently is an unsubstituted or substituted alkyl group of 1 to 4 carbon atoms or a cycloalkyl group, and $R_{11}$ is an alkyl group of 1 to 4 carbon atoms, a cycloalkyl group, an alkoxy group of 1 to 4 carbon atoms or the $NH_2$ group, or two or three members selected from $R_9$, $R_{10}$ and $R_{11}$ together with the nitrogen atom to which they are attached can form a heterocyclic ring; or Z is a radical of the formula

c) 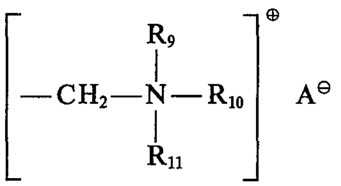

wherein $R_9$, $R_{10}$ and $R_{11}$ are as defined above for b) and A is in all cases an anion; Y is an anionic group, each B independently is a fused ring system containing 2 to 4 carbocyclic and/or heterocyclic rings and which, in addition to containing the substituents Z and Y, can be further substituted; n is 1 to 4 and m is 0 to 2, with the proviso that m is not greater than n.

2. A dioxazine compound according to claim 1, wherein $X_1$ and $X_2$ have the same meaning.

3. A dioxazine compound according to claim 2, wherein each of $X_1$ and $X_2$ is halogen, especially chlorine.

4. A dioxazine compound according to claim 1, wherein each B is the same and is one of the following fused ring systems: naphthalene, fluorene, diphenylene oxide, diphenylene sulfide, diphenylene dioxide, phenanthrene, anthracene, fluorenone, xanthone, thioxanthone, pyrene, chrysene, carbazole or anthraquinone.

5. A dioxazine compound according to claim 4, wherein each B is a fused carbazole ring system of the formula

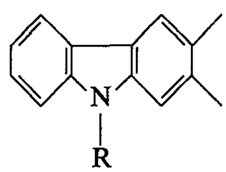

wherein R is hydrogen, an unbranched or branched alkyl group of 1 to 4 carbon atoms, or an acyl group.

6. A dioxazine compound according to claim 5, wherein each B is a fused ring system of the formula

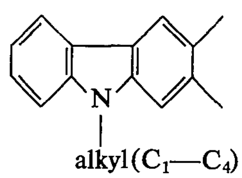

especially $C_2-H_5$.

7. A dioxazine compound according to claim 1, wherein Z is a quaternised basic group or contains such a group.

8. A dioxazine compound according to claim 1, wherein n is 1 to 3.

9. A basic dioxazine compound according to claim 1, wherein m is 0.

10. A dioxazine compound according to claim 1, wherein Z is a quaternised group or a radical which contains such a group, wherein the anion A is Cl, $CH_3COO$, $ZnCl_3$ or $CH_3SO_4$.

11. A dioxazine compound according to claim 1, wherein each of $X_1$ and $X_2$ is chlorine, B is a fused ring system of the formula

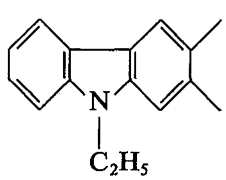

m is 0, n is 1 to 3, and Z is a quaternised group.

12. A process for the production of a dioxazine compound of the formula I according to claim 1, which comprises

a) introducing an optionally quaternisable basic group Z, or a radical containing such a group Z, into a compound of the formula II

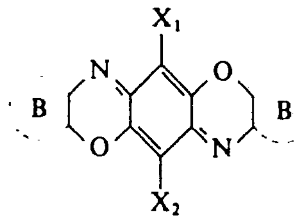

(II)

wherein B can be the same or different and $X_1$ and $X_2$ are as defined for formula I, which compound may not contain the radical Y, and then, if the radical Y is not yet present, introducing a watersolubilising group Y, and, if desired quaternising the quaternisable basic group Z with a quaternising agent; or

b) condensing a compound of the formula III

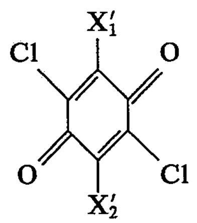

(III)

wherein $X_1'$ und $X_2'$ have the same meanings as $X_1$ and $X_2$ but are not CN, with at least a mole of a compound $B-NH_2$ and b mole of a compound $B'-NH_2$, the sum of a and b being at least 2 moles, and B and B' can be the same or different, which compound contains a quaternisable basic group Z or an already quaternised basic group Z, with ring-closure, to produce a dioxazine compound, quaternising a quaternisable basic group Z which may be present with a quaternising agent and, if desired, introducing the watersolubilising group Y, or, if $X_1$ and $X_2$ in the final product of formula I are CN, condensing a compound of the formula IIIa

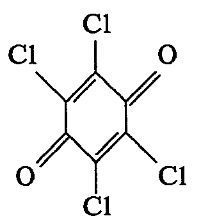

(IIIa)

with a mole of $B-NH_2$ and b mole of $B'-NH_2$, with ring-closure, and subsequently replacing both chlorine atoms at the positions of $X_1$ and $X_2$ by CN.

13. Use of a non-quaternised or quaternised basic dioxazine compound according to claim 1 as a dye for colouring and printing textiles, paper, leather and for the mass coloration of synthetic linear polyamides.

14. Use of a non-quaternised or quaternised basic dioxazine compound according to claim 1 as dye for colouring and printing natural and regenerated cellulosic fabric, especially cotton, and viscose, without the addition of salt.

15. Use of a non-quaternised or quaternised basic dioxazine compound according to claim 1 as dye for colouring and printing paper of all kinds.

16. Use of a non-quaternised or quaternised basic dioxazine compound according to claim 1 for colouring and printing bleached, unsized lignin-free paper (tissues).

17. Use of a non-quaternised or quaternised basic dioxazine compound according to claim 1 for colouring and printing natural polyamide material such as wool or silk, or modified polyamide which can be dyed by basic dyes.

18. Use of a non-quaternised or quaternised basic dioxazine compound according to claim 1 for colouring and printing modified polyester material which can be dyed by basic dyes.

19. Use of a non-quaternised or quaternised basic dioxazine compound according to claim 1 for colouring and printing acrylic fabrics.

20. The material which is dyed or printed with a non-quaternised or quaternised basic dioxazine compound according to claim 1.

**Revendications**

1. Composés dioxaziniques ayant la formule I

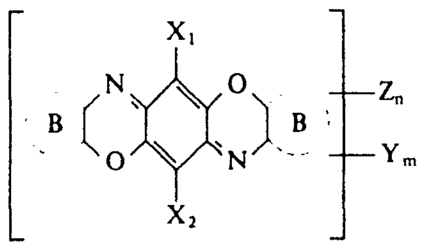

(I)

dans laquelle $X_1$ et $X_2$, indépendamment l'un de l'autre, désignent un groupe alkyle non ramifié ou ramifié ayant 1 à 4 atomes de carbone, un groupe phényle éventuellement substitué, de l'halogène, de l'hydrogène, un groupe cyano, un groupe phénylamino éventuellement substitué dans le reste phényle, le groupe $CONH_2$, le groupe CONH-phényle qui peut être substitué dans le reste phényle ou bien un groupe COO-alkyle ($C_1-C_4$);
Z désigne soit un groupe basique de formule

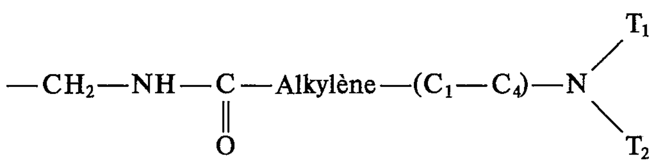

dans laquelle $T_1$ désigne H ou un reste alkyle à bas poids moléculaire éventuellement substitué par un radical hydroxyle ou un reste cyclohexyle éventuellement substitué par 1 à 3 restes méthyle, ou bien un reste phényle; et $T_2$ désigne un reste alkyle à bas poi móléculaire éventuellement substitué par un radical hydroxyle et les restes $T_1$ et $T_2$ ensemble avec l'atome N lié à ces restes peuvent former un noyau pyrrolidine, pipéridine, morpholine ou pipérazine, soit Z désigne un groupe rendu quaternaire ayant la formule

a) $-CH_2-NH-CO-\text{Alkylène}-(C_1-C_4)-K^{\oplus} A^{\ominus}$

dans laquelle

$K^{\oplus}$ désigne le reste 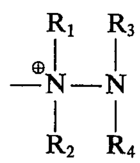 ou 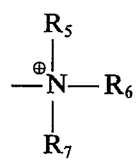

où $R_1$ et $R_2$ représentent chacun un groupe alkyle ($C_1-C_4$) ou un groupe cycloalkyle ou bien, en incluant l'atome d'azote ils peuvent former un hétérocycle;
$R_3$ et $R_4$, indépendamment l'un de l'autre, désignent chacun de l'hydrogène, un groupe alkyle en ($C_1-C_4$) ou un groupe cycloalkyle ou bien un groupe acyle;
$R_5$ désigne un groupe alkyle ($C_1-C_4$) éventuellement substitué par OH ou $NH_2$, un groupe cycloalkyle ou bien un groupe aryle;
$R_6$ et $R_7$, indépendamment l'un de l'autre, désignent un groupe alkyle ($C_1-C_4$), un groupe cycloalkyle, un groupe alcoxy ($C_1-C_4$) ou un groupe aryle; ou qu'en incluant l'atome d'azote, $R_1$ et $R_3$ et/ou $R_2$ et $R_4$ ou $R_5$ et $R_6$ ou bien $R_5$, $R_6$ et $R_7$ forment ensemble un noyau pyridine éventuellement substitué ou le noyau de formule

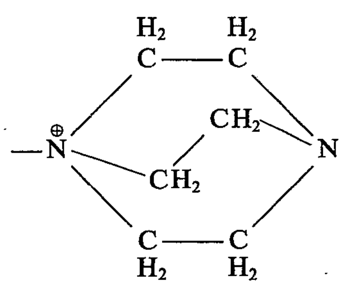

ou bien

b) 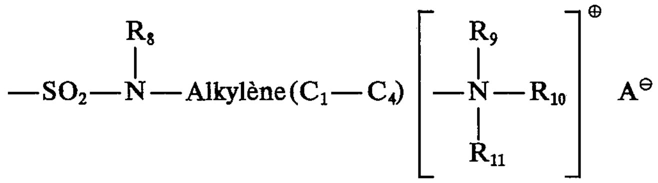

où $R_8$ est de l'hydrogène ou un groupe alkyle $(C_1-C_4)$, $R_9$ et $R_{10}$, indépendamment l'un de l'autre, désignent un groupe alkyle $(C_1-C_4)$ ou un groupe cycloalkyle, et $R_{11}$ désigne un groupe alkyle $(C_1-C_4)$, un groupe cycloalkyle, un groupe alcoxy $(C_1-C_4)$ ou bien le groupe $NH_2$ ou, que 2 ou 3 restes de $R_9$, $R_{10}$ et $R_{11}$ peuvent former ensemble avec l'atome d'azote un noyau hétérocyclique, ou bien

c) 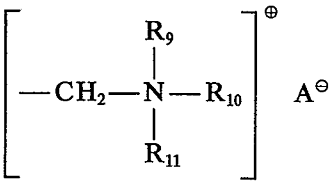

dans laquelle $R_9$, $R_{10}$ et $R_{11}$ ont les significations mentionnées sous b), et où A représente dans tous les cas un anion; Y est un groupe anionique; les B, indépendamment l'un de l'autre, désignent un système cyclique condensé ayant 2 à 4 noyaux carbocycliques et/ou hétérocycliques qui en plus des substituants Z et Y, peut encore porter éventuellement d'autres substituants; n représente les nombres de 1 à 4 et m les nombres de 0 à 2 à condition que m ne soit pas supérieur à n.

2. Composés dioxaziniques selon la revendication 1, caractérisés par le fait que les symboles $X_1$ et $X_2$ sont identiques.

3. Composés dioxaziniques selon la revendication 2, caractérisés par le fait que les symboles $X_1$ et $X_2$ désignent chacun de l'halogène, surtout du chlore.

4. Composés dioxaziniques selon la revendication, caractérisés par le fait que les deux B sont identiques et désignent un des systèmes cycliques condensés suivants: naphthalène, fluorène, diphénylène-oxyde, diphénylènesulfure, diphénylènedioxyde, phénanthrène, anthracène, fluorénone, xanthone, thioxanthone, pyrène, chrysène, carbazole ou anthraquinone.

5. Composés dioxaziniques selon la revendication 4, caractérisés par le fait que les deux B désignent un système cyclique carbazole condensé ayant la formule

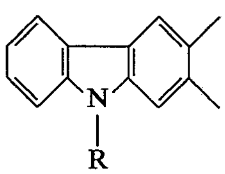

dans laquelle R est de l'hydrogène, un groupe alkyle non ramifié ou ramifié avec 1 à 4 atomes de carbone ou bien un groupe acyle.

6. Composés dioxaziniques selon la revendication 5, caractérisés par le fait que les deux B désignent un système cyclique condensé ayant la formule

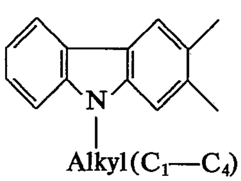

en particulier $C_2H_5$.

7. Composés dioxaziniques selon la revendication 1, caractérisés par le fait que Z représente un groupe basique rendu quaternaire ou bien contient un groupe de ce genre.

8. Composés dioxaziniques selon la revendication 1, caractérisés par le fait que n désigne les nombres 1 à 3.

9. Composés basiques dioxaziniques selon la revendication 1, caractérisés par le fait que m désigne le nombre 0.

10. Composés dioxaziniques selon la revendication 1, dans lesquels Z représente un groupe rendu

quaternaire ou bien un reste contenant un groupe de ce genre, et dans lesquels l'anion A désigne Cl, $CH_3COO$, $ZnCl_3$ ou $CH_3SO_4$.

11. Composés dioxaziniques selon la revendication 1, caractérisés par le fait que $X_1$ et $X_2$ désignent chacun du chlore, B est un système cyclique condensé de formule

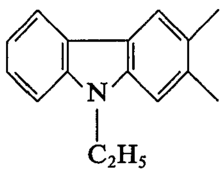

m représente le nombre 0, n les nombres 1 à 3 et Z est un groupe rendu quaternaire.

12. Procédé pour la préparation de composés dioxaziniques de formule I selon la revendication 1, caractérisé par le fait que

a) dans un composé de formule II

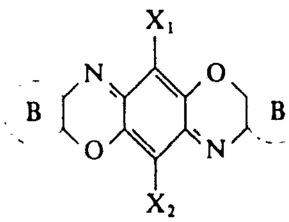

(II)

dans laquelle B peuvent être identiques ou différents, et $X_1$ et $X_2$ qui ont les significations données sous la formule I, et qui Peuvent contenir éventuellement le reste Y, on introduit un groupe basique Z éventuellement quaternisable ou bien un reste contenant un groupe Z de ce genre, puis, dans la mesure où Y n'est pas présent, on introduit éventuellement un groupe Y aquasolubilisant et on quaternise le groupe basique Z quaternisable éventuellement avec un agent de quaternisation; ou

b) on condense un composé de formule III

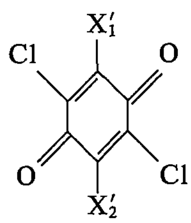

(III)

dans laquelle $X_1'$ et $X_2'$ sont identiques à $X_1$ et $X_2$ mais ne désignent aucun groupe CN, avec au moins a-mole d'un composé $B-NH_2$, et b-mole d'un composé $B'-NH_2$, la somme de a et de b étant au moins de 2, et où B et B' sont égales ou différents, composé qui contient un groupe basique Z éventuellement quaternisable ou déjà rendu quaternaire, par cyclisation pour avoir un composé dioxazinique, on rend quaternaire un groupe basique Z quaternisable éventuellement présent avec un agent de quaternisation et on introduit éventuellement le groupe Y aquasolubilisant ou bien, dans la mesure où $X_1$ et $X_2$ désignent des groupes CN dans le produit fini de formule I, on condense un composé de formule IIIa

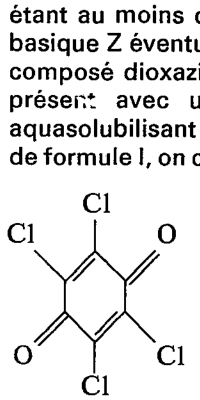

(IIIa)

avec a-mole ou b-mole, respectivement, de $B-NH_2$ ou de $B'-NH_2$ par cyclisation, puis on remplace les deux atomes de chlore sur les positions de $X_1$ et $X_2$ par des groupes CN.

13. Utilisation des composés basiques dioxaziniques rendus éventuellement quaternaires selon la revendication 1, comme colorants pour la teinture et l'impression des matières textiles, du papier et du cuir, ainsi que pour la teinture dans la masse des superpolyamides synthétiques linéaires.

14. Utilisation des composés basiques dioxaziniques éventuellement rendus quaternaires selon la

revendication 1, comme colorants pour la teinture et l'impression des matières en cellulose naturelle et en cellulose régénérée, surtout du coton et de la Viscose, sans addition de sels.

15. Utilisation des composés basiques dioxaziniques éventuellement rendus quaternaires selon la revendication 1 comme colorants pour la teinture et l'impression du papier de toute catégorie.

16. Utilisation des composés basiques dioxaziniques éventuellement rendus quaternaires selon la revendication 1 pour la teinture et l'impression des papiers sans lignine blanchis, non collés (papier de soie).

17. Utilisation des composés basiques dioxaziniques éventuellement rendus quaternaires selon la revendication 1 pour la teinture et l'impression des matières en polyamide naturelles telles que la laine et la soie, ou des polyamides modifié teignables par voie basique.

18. Utilisation des composés basiques dioxaziniques éventuellement rendus quaternaires selon la revendication 1, pour la teinture et l'impression des matières en polyester modifié, teignables par voie basique.

19. Utilisation des composés basiques dioxaziniques éventuellement rendus quaternaires selon la revendication 1, pour la teinture et l'impression des matières en polyacrylonitrile.

20. Les matières traitées ou bien teintes et imprimées avec les composés basiques dioxaziniques éventuellement rendus quaternaires selon la revendication 1.